# EUROPEAN PATENT APPLICATION

(11) **EP 4 440 184 A1**
(43) Date of publication of application: **02.10.2024**
(21) Application number: 22914487.8
(22) Date of filing: 22.12.2022
(51) Int. Cl.: H04W 24/08

(54) **COMMUNICATION METHOD AND DEVICE, STORAGE MEDIUM AND COMPUTER PROGRAM PRODUCT**

(30) Priority: 28.12.2021 CN 202111629624
(71) Applicant: Huawei Technologies Co., Ltd., Shenzhen, Guangdong 518129 (CN)
(72) Inventor: ZHENG, Wuyang, Shenzhen, Guangdong 518129 (CN); WANG, Fanfan, Shenzhen, Guangdong 518129 (CN); GENG, Tingting, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2022/141048
(87) International publication number: WO 2023/125233

(57) **Abstract**

Embodiments of this application provide a communication method and apparatus, a storage medium, and a computer program product. The communication method includes: in response to impact of a maximum permissible exposure MPE, recording radiation impact information generated due to the impact of the MPE; receiving a first radio resource control RRC reconfiguration message from a source base station; recording a measurement report; and sending the measurement report and the radiation impact information to the source base station. According to embodiments of this application, impact of the MPE on mobility can be reduced, and a handover success rate can be increased.

## Description

This application claims priority to Chinese Patent Application No. 202111629624.6, filed with the China National Intellectual Property Administration on December 28, 2021 and entitled "COMMUNICATION METHOD AND APPARATUS, STORAGE MEDIUM, AND COMPUTER PROGRAM PRODUCT", which is incorporated herein by reference in its entirety.

### TECHNICAL FIELD

This application relates to the field of wireless communication technologies, and in particular, to a communication method and apparatus, a storage medium, and a computer program product.

### BACKGROUND

With rapid development of communication technologies, when people enjoy various conveniences brought by wireless communication devices, impact of electromagnetic radiation generated by these wireless communication devices on human health is increasingly concerned by people. Government departments and telecommunication regulatory agencies of various countries require that radiation of electromagnetic waves to human bodies be reduced to a safe level. For example, the Federal Communications Commission (federal communications commission, FCC) defines a maximum permissible exposure (maximum permissible exposure, MPE) of the electromagnetic radiation. A safety value of the MPE is set to ensure that a corresponding specific absorption rate (specific absorption rate, SAR) value does not exceed a limit under any exposure condition.

When a specific trigger condition is met, a terminal device reports measurement reports (measurement report) of a serving cell in which the terminal device is located and a neighboring cell. A network device determines, based on the measurement reports, a mobility-related behavior of the terminal device, for example, handover (handover). However, if the terminal device meets an MPE limiting condition, a capability of the terminal device is limited, for example, transmit power is reduced, or even a transmit beam is disabled. Consequently, the terminal device sends a preamble (preamble) and/or an MSG3, and a target base station easily fails to demodulate a random

### SUMMARY

Embodiments of this application disclose a communication method and apparatus, a storage medium, and a computer program product, to reduce impact of an MPE on mobility, and increase a handover success rate.

According to a first aspect, an embodiment of this application discloses a first communication method, applied to a terminal device, an apparatus (for example, a chip, a chip system, or a circuit) in a terminal device, or an apparatus that can be used in cooperation with a terminal device. The following uses a terminal device as an example for description. The communication method includes: in response to impact of a maximum permissible exposure MPE on the terminal device, recording radiation impact information generated due to the impact of the MPE; receiving a first RRC reconfiguration message from a source base station; recording a measurement report of the terminal device; and sending the measurement report and the radiation impact information to the source base station. In this way, the source base station may perform handover processing based on the radiation impact information, so that impact of the MPE on mobility can be reduced, and a handover success rate can be increased.

In a possible example, before the recording radiation impact information of the terminal device, the communication method further includes: receiving indication information from a network side or obtaining indication information from a preset protocol, where the indication information indicates that under the impact of the MPE, if the first RRC reconfiguration message is received from the source base station, reporting of the measurement report and the radiation impact information generated due to the MPE that are of the terminal device is allowed. The sending the measurement report and the radiation impact information to the source base station includes: sending the measurement report and the radiation impact information to the source base station based on the indication information. In this way, when the measurement report needs to be reported, the terminal device may upload, based on the indication information, the radiation impact information generated by the terminal device due to the impact of the MPE. This helps reduce the impact of the MPE on the mobility, and can increase the handover success rate.

In a possible example, the indication information specifically indicates to add the radiation impact information to the measurement report of the terminal device. The sending the measurement report and the radiation impact information to the source base station includes: sending, to the source base station based on the indication information, a measurement report to which the radiation impact information is added. In this way, the terminal device may add, to the measurement report based on the indication information, the radiation impact information generated by the terminal device due to the impact of the MPE, and upload the measurement report to which the radiation impact information is added. This can avoid a handover failure event caused by a failure to optimize, based on the radiation impact information, a second RRC reconfiguration message sent to the terminal device because the radiation impact information is received after the measurement report.

In a possible example, the indication information alternatively indicates not to report the measurement report when the terminal device is affected by the MPE. In this way, after the first RRC reconfiguration message of the source base station is received, the measurement report is not sent to the source base station, and a handover procedure is not triggered. This can avoid a handover failure.

In a possible example, the indication information alternatively indicates that reporting of the measurement report is allowed when the terminal device is not affected by the MPE. In this way, because the terminal device is not affected by the MPE, a handover procedure of the terminal device is not affected.

In a possible example, after the measurement report and the radiation impact information are sent to the source base station, the communication method further includes: receiving, from the source base station, a second RRC reconfiguration message that corresponds to the radiation impact information and that is from the target base station. The second RRC reconfiguration message may be understood as a message for optimizing an RRC reconfiguration message based on the radiation impact information. In this way, random access may be initiated to the target base station based on the second RRC reconfiguration message, to reduce the impact of the MPE.

In a possible example, the communication method further includes: initiating random access to the target base station based on the second RRC reconfiguration message or the radiation impact information. In this way, an uplink beam for sending a random parameter in the random access process may not be affected by the MPE. This reduces impact of the MPE in the random access process, and helps increase a handover success rate.

According to a second aspect, an embodiment of this application discloses a second communication method, applied to a terminal device. The communication method includes: receiving indication information from a network side or obtaining indication information from a preset protocol, where the indication information indicates an unlimited object and/or a to-be-limited object of an MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario; and in response to a fact that the terminal device meets a limiting condition of the MPE, processing the to-be-limited object based on the indication information, so that the terminal device is affected by the MPE. In this way, the to-be-limited object may be processed based on the indication information, so that impact of the MPE on mobility can be reduced, and a handover success rate can be increased.

According to a third aspect, an embodiment of this application discloses a third communication method, applied to a source base station, an apparatus (for example, a chip, a chip system, or a circuit) in a source base station, or an apparatus that can be used in cooperation with a source base station. The following uses a source base station as an example for description. The source base station may also be referred to as a source network device. The communication method includes: sending a first RRC reconfiguration message to a terminal device; and receiving, from the terminal device, a measurement report and radiation impact information that are of the terminal device, where the radiation impact information is information that is generated due to impact of an MPE and that is recorded when the terminal device is affected by the MPE. In this way, the source base station may perform handover processing based on the radiation impact information, so that impact of the MPE on mobility can be reduced, and a handover success rate can be increased.

In a possible example, the receiving a measurement report and radiation impact information that are of the terminal device from the terminal device includes: receiving, from the terminal device, a measurement report to which the radiation impact information is added. In this way, the terminal device may add, to the measurement report based on the indication information, the radiation impact information generated by the terminal device due to the impact of the MPE, and upload the radiation impact information. This can avoid a handover failure event caused by a failure to optimize, based on the radiation impact information, a second RRC reconfiguration message sent to the terminal device because the radiation impact information is received after the measurement report.

In a possible example, after the measurement report and the radiation impact information that are of the terminal device are received from the terminal device, the communication method further includes: sending the radiation impact information to a target base station. In this way, the target base station may perform handover processing based on the radiation impact information, so that impact of the MPE on mobility can be reduced, and a handover success rate can be increased.

In a possible example, before the radiation impact information is sent to the target base station, the communication method further includes: determining the target base station based on the radiation impact information. In this way, the impact of the MPE on the mobility can be reduced, and the handover success rate can be increased.

In a possible example, after the radiation impact information is sent to the target base station, the communication method further includes: receiving a handover request reject message from the target base station. In this way, a handover procedure is not performed, so that a handover failure can be avoided.

In a possible example, after the radiation impact information is sent to the target base station, the communication method further includes: receiving, from the target base station, the second RRC reconfiguration message corresponding to the radiation impact information; and sending the second RRC reconfiguration message to the terminal device. In this way, the terminal device may initiate random access to the target base station based on the second RRC reconfiguration message, to reduce the impact of the MPE.

According to a fourth aspect, an embodiment of this application discloses a fourth communication method, applied to a source base station, an apparatus in a source base station, or an apparatus that can be used in cooperation with a source base station. The following uses a source base station as an example for description. The communication method includes: sending indication information to a terminal device, where the indication information indicates an unlimited object and/or a to-be-limited object of an MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario. In this way, the terminal device may process the to-be-limited object based on the indication information, so that impact of the MPE on mobility can be reduced, and a handover success rate can be increased.

In a possible example, before the indication information is sent to the terminal device, the communication method further includes: identifying that the terminal device is in the unlimited scenario. In this way, indication effectiveness can be improved.

According to a fifth aspect, an embodiment of this application discloses a fifth communication method, applied to a target base station, an apparatus (for example, a chip, a chip system, or a circuit) in a target base station, or an apparatus that can be used in cooperation with a target base station. The following uses a target base station as an example for description. The target base station may also be referred to as a target network device. The communication method includes: receiving a measurement report and radiation impact information from a source base station, where the radiation impact information is information that is generated due to impact of an MPE and that is recorded when a terminal device is affected by the MPE. In this way, the target base station may perform handover processing based on the radiation impact information, so that impact of the MPE on mobility can be reduced, and a handover success rate can be increased.

In a possible example, after the measurement report and the radiation impact information are received from the source base station, the communication method further includes: sending a handover request reject message to the source base station. In this way, because no handover procedure is performed, a handover failure can be avoided.

In a possible example, after the measurement report and the radiation impact information are received from the source base station, the communication method further includes: sending, to the source base station, a second RRC reconfiguration message corresponding to the radiation impact information. In this way, the terminal device may initiate random access to the target base station based on the second RRC reconfiguration message, to reduce the impact of the MPE.

In a possible example, the communication method further includes: receiving random access initiated by the terminal device based on the second RRC reconfiguration message or the radiation impact information. In this way, impact of the MPE in the random access process can be reduced, and a handover success rate can be increased.

With reference to the first aspect, the third aspect, or the fifth aspect, in a possible example, the radiation impact information includes at least one of the following: uplink beam information, a maximum uplink power, and uplink power headroom.

With reference to the first aspect, the third aspect, or the fifth aspect, in a possible example, the radiation impact information is information that is generated due to the impact of the MPE and that is recorded when the terminal device is affected by the MPE, or when preset duration in which the terminal device is affected by the MPE expires, or when an uplink power adjusted after the terminal device is affected by the MPE is less than or equal to a preset threshold.

With reference to the second aspect or the fourth aspect, in a possible example, the unlimited channel includes a physical uplink control channel PUCCH and/or a physical random access channel PRACH, and the unlimited channel corresponding to the unlimited purpose includes a PRACH used for random access of handover.

With reference to the second aspect or the fourth aspect, in a possible example, the unlimited signaling bearer includes at least one of the following: a signaling radio bearer SRB1, an SRB2, and an SRB3.

With reference to the second aspect or the fourth aspect, in a possible example, the unlimited scenario includes at least one of the following: a handover scenario, an RRC establishment scenario, and an RRC reestablishment scenario.

According to a sixth aspect, an embodiment of this application discloses a first communication apparatus, applied to a terminal device, or an apparatus in a terminal device, or an apparatus that can be used in cooperation with a terminal device. The communication apparatus includes: a processing unit, configured to: in response to impact of a maximum permissible exposure MPE, record radiation impact information generated due to the impact of the MPE; and a transceiver unit, configured to receive a first RRC reconfiguration message from a source base station. The processing unit is further configured to record a measurement report; and send the measurement report and the radiation impact information to the source base station.

In a possible example, the communication apparatus further includes a storage unit, configured to store a preset protocol. The transceiver unit is further configured to receive indication information from a network side, or the processing unit is further configured to obtain indication information from the preset protocol, where the indication information indicates that under the impact of the MPE, if the first RRC reconfiguration message is received from the source base station, reporting of the measurement report and the radiation impact information generated due to the impact of the MPE is allowed. The transceiver unit is specifically configured to send the measurement report and the radiation impact information to the source base station based on the indication information.

In a possible example, the indication information specifically indicates to add the radiation impact information to the measurement report. The transceiver unit is specifically configured to send, to the source base station based on the indication information, a measurement report to which the radiation impact information is added.

In a possible example, the indication information alternatively indicates not to report the measurement report under the impact of the MPE.

In a possible example, the indication information alternatively indicates that reporting of the measurement report is allowed under no impact of the MPE.

In a possible example, the transceiver unit is further configured to receive, from the source base station, a second RRC reconfiguration message that corresponds to the radiation impact information and that is from a target base station.

In a possible example, the transceiver unit is further configured to initiate random access to the target base station based on the second RRC reconfiguration message or the radiation impact information. In this way, an uplink beam for sending a random parameter in the random access process may not be affected by the MPE. This reduces impact of the MPE in the random access process, and helps increase a handover success rate.

According to a seventh aspect, an embodiment of this application discloses a second communication apparatus, applied to a terminal device, or an apparatus in a terminal device, or an apparatus that can be used in cooperation with a terminal device. The communication apparatus includes: a storage unit, configured to store a preset protocol; a transceiver unit, configured to receive indication information, or a processing unit, configured to obtain indication information from the preset protocol, where the indication information indicates an unlimited object and/or a to-be-limited object of an MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario. The processing unit is further configured to: in response to a fact that a limiting condition of the MPE is met, process the to-be-limited object based on the indication information, so that the terminal device is affected by the MPE.

According to an eighth aspect, an embodiment of this application discloses a third communication apparatus, applied to a source access network device, an apparatus in a source access network device, or an apparatus that can be used in cooperation with a source access network device. The communication apparatus includes: a transceiver unit, configured to: send a first RRC reconfiguration message to a terminal device; and receive, from the terminal device, a measurement report and radiation impact information that are of the terminal device, where the radiation impact information is information that is generated due to impact of an MPE and that is recorded when the terminal device is affected by the MPE.

In a possible example, the transceiver unit is specifically configured to receive, from the terminal device, a measurement report to which the radiation impact information is added.

In a possible example, the transceiver unit is further configured to send the radiation impact information to a target base station.

In a possible example, the communication apparatus further includes a processing unit, configured to determine the target base station based on the radiation impact information.

In a possible example, the transceiver unit is further configured to receive a handover request reject message from the target base station.

In a possible example, the transceiver unit is further configured to: receive, from the target base station, a second RRC reconfiguration message corresponding to the radiation impact information; and send the second RRC reconfiguration message to the terminal device.

According to a ninth aspect, an embodiment of this application discloses a fourth communication apparatus, applied to a source access network device, an apparatus in a source access network device, or an apparatus that can be used in cooperation with a source access network device. The communication apparatus includes: a transceiver unit, configured to send indication information to a terminal device, where the indication information indicates an unlimited object and/or a to-be-limited object of an MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario.

In a possible example, the communication apparatus further includes a processing unit, configured to identify that the terminal device is in the unlimited scenario.

According to a tenth aspect, an embodiment of this application discloses a fifth communication apparatus, applied to a target base station. The communication apparatus includes: a transceiver unit, configured to receive a measurement report and radiation impact information from a source base station, where the radiation impact information is information that is generated due to impact of an MPE and that is recorded when a terminal device is affected by the MPE.

In a possible example, the transceiver unit is further configured to send a handover request reject message to the source base station.

In a possible example, the transceiver unit is further configured to send a second RRC reconfiguration message corresponding to the radiation impact information to the source base station.

In a possible example, the transceiver unit is further configured to receive random access initiated by the terminal device based on the second RRC reconfiguration message or the radiation impact information.

With reference to the sixth aspect, the eighth aspect, or the tenth aspect, in a possible example, the radiation impact information includes at least one of the following: uplink beam information, a maximum uplink power, and uplink power headroom.

With reference to the sixth aspect, the eighth aspect, or the tenth aspect, in a possible example, the radiation impact information is information that is generated due to the impact of the MPE and that is recorded when the terminal device is affected by the MPE, or when preset duration in which the terminal device is affected by the MPE expires, or when an uplink power adjusted after the terminal device is affected by the MPE is less than or equal to a preset threshold.

With reference to the seventh aspect or the ninth aspect, in a possible example, the unlimited channel includes a PUCCH and/or a PRACH, and the unlimited channel corresponding to the unlimited purpose includes a PRACH used for random access of handover.

With reference to the seventh aspect or the ninth aspect, in a possible example, the unlimited signaling bearer includes at least one of the following: an SRB1, an SRB2, and an SRB3.

With reference to the seventh aspect or the ninth aspect, in a possible example, the unlimited scenario includes at least one of the following: a handover scenario, an RRC establishment scenario, and an RRC reestablishment scenario.

According to an eleventh aspect, this application discloses a sixth communication apparatus, including a processor, and a memory and a communication interface that are connected to the processor. The memory is configured to store one or more programs, and the processor is configured to perform steps according to any one of the foregoing aspects.

According to a twelfth aspect, an embodiment of this application discloses a computer-readable storage medium. The computer-readable storage medium stores instructions, and when the instructions are run on a computer, the computer is enabled to perform the methods according to any one of the foregoing aspects.

According to a thirteenth aspect, an embodiment of this application discloses a computer program product. The computer program product is configured to store a computer program. When the computer program runs on a computer, the computer is enabled to perform the method according to any one of the foregoing aspects.

According to a fourteenth aspect, an embodiment of this application discloses a first chip, including a processor and a memory. The processor is configured to invoke, from the memory, instructions stored in the memory, and run the instructions, so that a device in which the chip is installed performs the method according to any one of the foregoing aspects.

According to a fifteenth aspect, an embodiment of this application discloses a second chip, including an input interface, an output interface, and a processing circuit. The input interface, the output interface, and the processing circuit are connected to each other through an internal connection path, and the processing circuit is configured to perform the method according to any one of the foregoing aspects.

According to a sixteenth aspect, an embodiment of this application discloses a third chip, including an input interface, an output interface, and a processor, and optionally, further including a memory. The input interface, the output interface, the processor, and the memory are connected through an internal connection path. The processor is configured to execute code in the memory. When the code is executed, the processor is configured to perform the method according to any one of the foregoing aspects.

According to a seventeenth aspect, an embodiment of this application discloses a chip system, including at least one processor, a memory, and an interface circuit. The memory, a transceiver, and the at least one processor are interconnected through a line. The at least one memory stores a computer program, and the computer program is used by the processor to perform the method according to any one of the foregoing aspects.

According to an eighteenth aspect, this application provides a communication system. The communication system includes a terminal device, a source base station, and a target base station. When the terminal device, the source base station, and the target base station are run in the communication system, the terminal device, the source base station, and the target base station are configured to perform any communication method according to the first aspect to the fifth aspect.

According to embodiments of this application, when the terminal device is affected by an MPE, radiation impact information generated due to impact of the MPE is recorded. If the terminal device receives a first RRC reconfiguration message from the source base station, the terminal device first records a measurement report, and then sends the measurement report and the radiation impact information to the source base station. In this way, the source base station may perform handover processing based on the radiation impact information, so that impact of the MPE on mobility can be reduced, and a handover success rate can be increased. After receiving the radiation impact information, the target base station may optimize a second RRC reconfiguration message. The terminal device may optimize a random access process based on the second RRC reconfiguration message or the radiation impact information, to reduce the impact of the MPE on the mobility. This may further increase the handover success rate. In addition, when the terminal device meets a limiting condition of the MPE, the terminal device may be processed based on indication information indicating an unlimited object and/or a to-be-limited object of the MPE. This can also reduce the impact of the MPE on the mobility, and increase the handover success rate.

### BRIEF DESCRIPTION OF DRAWINGS

The following describes accompanying drawings used in embodiments of this application.
FIG. 1 is a diagram of a structure of a communication system according to an embodiment of this application;
FIG. 2 is a diagram of a relationship between an MPE and an NHZ according to an embodiment of this application;
FIG. 3 is a schematic flowchart of a handover method in the conventional technology;
FIG. 4 is a schematic flowchart of a first communication method according to an embodiment of this application;
FIG. 5 is a schematic flowchart of a second communication method according to an embodiment of this application;
FIG. 6 is a schematic flowchart of a third communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The technical solutions in embodiments of this application may be applied to various communication systems, for example, current communication systems such as a global system for mobile communication (global system for mobile communication, GSM) corresponding to a second generation (second generation, 2G) mobile communication technology, a general packet radio service (general packet radio service, GPRS) between the second generation mobile communication technology and a third generation mobile communication technology, a code division multiple access (code division multiple access, CDMA) system, a wideband code division multiple access (wideband code division multiple access, WCDMA) system, and a universal mobile telecommunications system (universal mobile telecommunications system, UMTS) that correspond to the third generation (third generation, 3G) mobile communication technology, a long term evolution (long term evolution, LTE) system corresponding to a fourth generation (fourth generation, 4G) mobile communication technology, and a new radio (new radio, NR) technology system corresponding to a fifth generation (fifth generation, 5G) mobile communication technology, and may be applied to future communication systems such as a sixth generation (sixth generation, 6G) system.

In embodiments of this application, a network device may be a device configured to support a terminal in accessing a communication system. The network device may include an access network device. Main functions of the network device are: radio resource management, internet protocol (internet protocol, IP) header compression and user data stream encryption, mobile management entity (mobile management entity, MME) selection when user equipment is attached, user plane data routing to a service gateway (service gateway, SGW), paging message organization and sending, broadcast message organization and sending, measurements for mobility or scheduling purposes and configurations of measurement reports, and the like.

The access network device may include but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission and reception point, TRP, or transmission point, TP) or the like, and may be a gNB or a transmission point (TRP or TP) in a 5G system, for example, an NR system, or one antenna panel or a group (including a plurality of antenna panels) of antenna panels of a base station in a 5G system. Alternatively, the access network device may be referred to as a donor node, an IAB donor (IAB donor), a donor IAB, a donor or a donor gNB (donor gNB, DgNB), or the like. Alternatively, the access network device may be a network node that forms a gNB or a transmission point, for example, a baseband unit (BBU) or a distributed unit (distributed unit, DU).

In some deployments, a gNB may include a central unit (central unit, CU) and a DU. The gNB may further include a radio unit (radio unit, RU). The CU implements some functions of the gNB, and the DU implements some functions of the gNB. For example, the CU implements functions at a radio resource control (radio resource control, RRC) layer and a packet data convergence protocol (packet data convergence protocol, PDCP) layer. The DU implements functions at a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, it may also be considered that higher layer signaling, such as RRC layer signaling or PDCP layer signaling, may be sent by the DU or sent by the DU and the CU. It may be understood that the access network device may be a CU node, a DU node, or a device including a CU node and a DU node. In addition, the CU may be classified into an access network device in an access network RAN, or the CU may be classified into an access network device in a core network CN. This is not limited herein.

A TRP is also referred to as a transmission point. Each TRP has one or more antenna panels (panels). A plurality of TRPs may simultaneously perform data transmission with one terminal device. The terminal device has at least one antenna panel, and a direction of a transmit beam and/or a receive beam of the antenna panel can be changed by adjusting a parameter of the antenna panel. When the terminal device has at least two antenna panels, the terminal device may simultaneously send or receive a beam by using different antenna panels.

In embodiments of this application, the network device may further include a core network device, which may alternatively be referred to as a core network element. The core network device may be connected to one or more access network devices, and may provide the terminal in the system with one or more functions of session management, access authentication, internet protocol (internet protocol, IP) address allocation, and data transmission. For example, the core network device may be an MME or an SGW in a 4G access technology communication system, an access and mobility management function (access and mobility management function, AMF) network element or a user plane function (user plane function, UPF) network element in a 5G access technology communication system, or the like. In embodiments of this application, the network device may be the foregoing access network device or the foregoing core network device. This is not limited herein.

In embodiments of this application, the terminal device is a device having a wireless transceiver function. The terminal device may be deployed on land, and include an indoor or outdoor device, a handheld device, a wearable device, or a vehicle-mounted device. The terminal device may be further deployed on a water surface (for example, on a ship) or in the air (for example, on an airplane, a balloon, or a satellite). The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

An application scenario is not limited in embodiments of this application. The terminal device may sometimes be referred to as user equipment (User Equipment, UE), a terminal (terminal), an access terminal, a UE unit, a UE station, a mobile device, a mobile station (mobile station), a mobile terminal, a mobile client, a mobile unit (mobile unit), a remote station, a remote terminal device, a remote unit, a radio unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G, a terminal device in a future evolved public land mobile network (public land mobile network, PLMN), or the like. In the following descriptions, the UE is used as a terminal device for description.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

In embodiments of this application, terms "information (information)", "signal (signal)", "message (message)", and "channel (channel)" may be interchangeably used sometimes. It should be noted that meanings expressed by the terms are consistent when differences between the terms are not emphasized. The terms "of (of)", "corresponding (corresponding, relevant)", and "corresponding (corresponding)" may be interchangeably used sometimes. It should be noted that meanings expressed by the terms are consistent when differences between the terms are not emphasized.

The terms "system" and "network" may be used interchangeably in embodiments of this application. "A plurality of" means two or more. In view of this, "a plurality of" may also be understood as "at least two" in embodiments of this application. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, in the descriptions of embodiments of this application, terms such as "first" and "second" are only used for distinction and description, but cannot be understood as indication or implication of relative importance, and cannot be understood as an indication or implication of a sequence.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

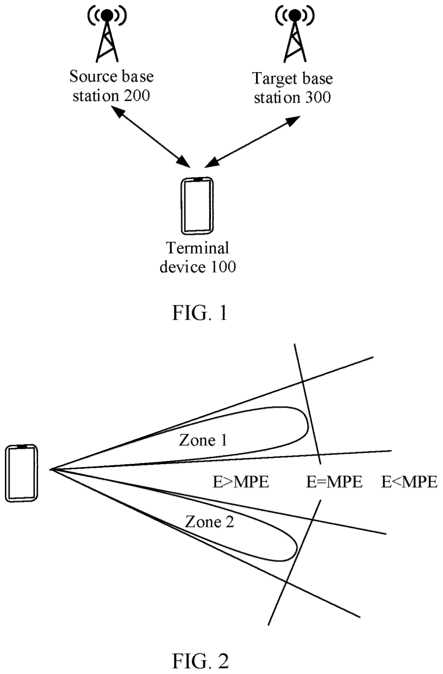

To make the objectives, the technical solutions, and the advantages of this application clearer, the following describes embodiments of this application with reference to the accompanying drawings in embodiments of this application. Refer to FIG. 1. FIG. 1 is a diagram of a structure of a communication system according to an embodiment of this application. As shown in FIG. 1, the communication system may include a terminal device 100, a source base station 200, and a target base station 300. Names of the terminal device 100, the source base station 200, and the target base station 300 are not limited in embodiments of this application. For example, a base station may also be referred to as a network device. The source base station may also be referred to as a source network device, and the target base station may also be referred to as a target network device.

A quantity of terminal devices 100, a quantity of source base stations 200, and a quantity of target base stations 300 are not limited in embodiments of this application. The source base station 200 and the target base station 300 each have a specific coverage area. Coverage areas of the source base station 200 and the target base station 300 may have an overlapping zone. Wireless coverage areas of the source base station 200 and the target base station 300 may include one or more cells. The terminal device 100 in a coverage area of a cell communicates with the source base station 200 and the target base station 300 through a transmission resource (for example, a frequency domain resource, a spectrum resource, or a time-frequency resource) of the cell. The cell may be a macro cell, or may be a small cell (small cell). Optionally, the small cell may include a metro cell (metro cell), a micro cell (micro cell), a pico cell (pico cell), a femto cell (femto cell), or the like. Specific technologies and specific device forms used by the source base station 200 and the target base station 300 are not limited in embodiments of this application.

A terminal device located in a coverage area of the source base station 200 may communicate with the source base station 200 in a wireless manner. A terminal device located in a coverage area of the target base station 300 may communicate with the target base station 300 in a wireless manner. A terminal device located in the overlapping zone may communicate with the source base station 200 and the target base station 300 in a wireless manner. For communication between the source base station 200 and the terminal device 100, when the source base station 200 serves as a sender, the source base station 200 may send downlink information to the terminal device 100. Correspondingly, when the terminal device 100 serves as a receiver, the terminal device 100 may receive the downlink information from the source base station 200. When the terminal device 100 serves as a sender, the terminal device 100 may send uplink information to the source base station 200. Correspondingly, when the source base station 200 serves as a receiver, the source base station 200 may receive the uplink information from the terminal device 100. The terminal device 100 may be located at a fixed location, or may be removable.

It should be noted that the communication system shown in FIG. 1 is an implementation of embodiments of this application. In actual application, the communication system and an apparatus in the communication system may further include more or fewer components. This is not limited herein. Optionally, the communication system may further include another device. For example, the communication system may further include a core network device (not shown in FIG. 1). The source base station 200 and the target base station 300 may be connected to the core network device in a wireless or wired manner. The core network device, the source base station 200, and the target base station 300 may be different independent physical devices, or functions of the core network device and functions of the source base station 200 and the target base station 300 may be integrated into a same physical device, or some functions of the core network device and some functions of the source base station 200 and the target base station 300 may be integrated into one physical device. For another example, the communication system may further include a wireless relay device or a wireless backhaul device (not shown in FIG. 1).

For ease of understanding embodiments of this application, the following first explains and describes some terms related to embodiments of this application.
(1) A maximum permissible exposure (maximum permissible exposure, MPE) is a maximum level of radio frequency radiation that allows a human body to be exposed to without doing harm to the human body. Such permissible values can be expressed in a field quantity or power density (power density, PD) of an electromagnetic field. A safety value of the MPE is set to ensure that a corresponding specific absorption rate (specific absorption rate, SAR) value does not exceed a limit under any exposure condition.
   Regulatory authorities, such as the Federal Communications Commission (federal communications commission, FCC), the International Commission on Non-Ionizing Radiation Protection (international commission on non-ionizing radiation protection, ICNIRP), the conformity with European (conformity with European, CE) certification, and the Nippon telegraph & telephone (Nippon telegraph & telephone, NTT), regulate or limit the MPE. An MPE limit is usually applied to wireless devices that communicate at above 6 GHz, and is a regulatory measure based on an amount of exposure per area because a higher frequency above 6 GHz interacts with a skin surface of the human body. For example, for a millimeter-wave system, the MPE limit is 1 mW/cm2, indicating that a power density suffered by the human body cannot exceed 1 mW/cm2. For another example, for a millimeter-wave system, the MPE limit is 20 mW/cm2, indicating that a power density suffered by the human body cannot exceed 20 mW/cm2.
(2) A nominal hazard zone (nominal hazard zone, NHZ) is a zone determined based on a beam transmit angle, a transmit power, and a beam diameter. In this zone, a transmit power of a terminal device exceeds an MPE requirement. Multi-antenna UE is used as an example for describing a relationship between the MPE and the NHZ. Refer to FIG. 2. FIG. 2 is a diagram of a relationship between an MPE and an NHZ according to an embodiment of this application. As shown in FIG. 2, the UE may transmit a plurality of beams. Based on a beam transmit angle, a transmit power, and a beam diameter, a zone 1 and a zone 2 may be NHZs, and exposures E in the zone 1 and the zone 2 are greater than the MPE.
(3) A limiting condition of the MPE is used to determine whether the terminal device is affected by the MPE, that is, whether to perform an operation of limiting a capability of the terminal device. For example, when the terminal device meets the limiting condition of the MPE, it is determined that the terminal device is affected by the MPE. When the terminal device does not meet the limiting condition of the MPE, it is determined that the terminal device is not affected by the MPE. That the terminal device meets the limiting condition of the MPE may include: The terminal device detects a person in the NHZ; the terminal device detects a person in the NHZ, and duration of the person in the NHZ exceeds a threshold; the terminal device detects an SAR value in the NHZ, and the SAR value exceeds a threshold; or the like. This is not limited herein.

In a possible example, when it is detected that a person is in the NHZ, the capability of the terminal device is triggered so that the terminal device is affected by the MPE, and a limiting operation is performed. Alternatively, only when stay time of the person in the NHZ exceeds the threshold, the capability of the terminal device may be triggered so that the terminal device is affected by the MPE, and a limiting operation is performed. The limiting operation may include reducing transmit powers (or referred to as uplink powers) of all beams, reducing an uplink power of a beam in a direction of the person, disabling a transmit beam, disabling a transmit beam in the direction of the person, or the like.

When no person is in the NHZ of the terminal device, a previously reduced uplink power of a beam may be restored.

(4) A preamble (preamble) is actual content sent by the terminal device on a physical random access channel, and includes a cyclic prefix (cyclic prefix, CP) whose length is Tcp and a sequence (sequence) whose length is Tseq.

(5) A message 3 (MSG3) is a third message in a random access process, and is used to distinguish between different terminal device states and application scenarios.

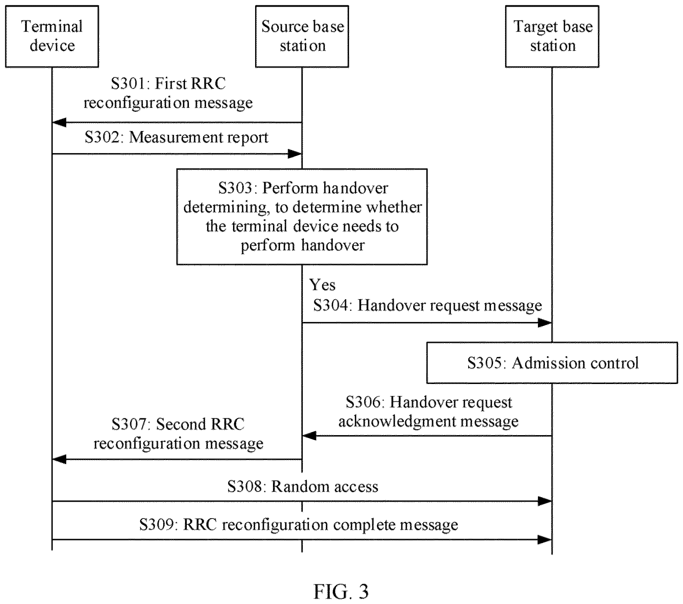

The following describes a procedure of an existing handover method. FIG. 3 is a schematic flowchart of a handover method in the conventional technology. As shown in FIG. 3, execution bodies include a terminal device, a source base station, and a target base station. The handover method may include the following steps.

S301: The source base station sends a first RRC reconfiguration (RRC Reconfiguration) message to the terminal device.

Correspondingly, the terminal device receives the first RRC reconfiguration message from the source base station.

The terminal device is currently located in a coverage area of a source cell of the source base station, and the terminal device is in a connected mode. The terminal device may perform signal measurement based on the first RRC reconfiguration message. Optionally, the first RRC reconfiguration message may include but is not limited to parameters such as a measurement object, a report configuration, and a measurement identifier.

S302: The terminal device sends a measurement report (Measurement Report) to the source base station.

Correspondingly, the source base station receives the measurement report from the terminal device.

After measuring a cell based on the first RRC reconfiguration message, the terminal device may generate the measurement report. The cell may be a cell indicated in the first RRC reconfiguration message or a cell determined based on the first RRC reconfiguration message, for example, an intra-frequency neighboring cell and an inter-frequency neighboring cell of the source cell currently accessed by the terminal device. The terminal device may report various events to the source base station by using the measurement report. An occasion at which the terminal device reports the measurement report is not limited in this application. For example, when signal strength of the source cell currently accessed by the terminal device is less than a first threshold, and signal strength of a target cell is greater than a second threshold, the terminal device sends the measurement report to the source base station. Specific values of the first threshold and the second threshold are not limited.

S303: The source base station performs handover determining, to determine whether the terminal device needs to perform handover.

Specifically, after receiving the measurement report reported by the terminal device, the source base station determines, based on the measurement report, whether the terminal device needs to perform handover. If it is determined that the terminal device needs to perform handover, step S304 continues to be performed.

S304: The source base station sends a handover request (Handover Request) message to the target base station.

Correspondingly, the target base station receives the handover request message from the source base station.

S305: The target base station performs admission control (Admission Control).

Specifically, the target base station determines, based on a status like a quantity of connections of the target base station, whether to allow access of the terminal device. If the target base station allows access of the terminal device, S306 continues to be performed.

S306: The target base station sends a handover request acknowledgment (Handover Request ACK) message to the source base station.

Correspondingly, the source base station receives the handover request acknowledgment message from the target base station.

Optionally, the handover request acknowledgment message may include but is not limited to parameters such as a new cell radio network temporary identity (cell radio network temporary identity, C-RNTI) and a target base station security algorithm.

S307: The source base station sends a second RRC reconfiguration message to the terminal device.

Correspondingly, the terminal device receives the second RRC reconfiguration message from the source base station.

In this step, the second RRC reconfiguration message may also be referred to as a handover command (Handover Command) message. The second RRC reconfiguration message may include all or a part of content of the handover request acknowledgment message in S306. Optionally, the second RRC reconfiguration message may include but is not limited to parameters such as the new C-RNTI and the target base station security algorithm.

The source base station does not read the second RRC reconfiguration message, and directly forwards the second RRC reconfiguration message to the terminal device. Specifically, a handover command in an NR system includes related information of a target cell and a related configuration parameter required for UE to access the target cell. For example, the handover command includes information about the target cell (for example, a physical cell identifier (physical cell identifier, PCI) of the target cell and frequency information corresponding to the target cell (for example, a frequency corresponding to the target cell)), a C-RNTI allocated by the target cell to a terminal device, and random access channel (random access channel, RACH) resource information used by the terminal device to perform random access to the target base station.

S308: The terminal device initiates random access (Random Access) to the target base station.

In an existing handover procedure, the terminal device disconnects from the source base station, and a temporary interruption occurs when the terminal device receives and sends data before the terminal device successfully accesses the target base station.

S309: The terminal device sends an RRC reconfiguration complete (RRC Reconfiguration Complete) message to the target base station.

Specifically, after the terminal device accesses the target cell of the target base station, the terminal device sends the RRC reconfiguration complete message to the target base station, to complete the handover from the source base station to the target base station.

A handover preparation period is a period in which the source base station sends a reconfiguration message to the terminal device, that is, before step S306. A handover performing period is a period from time when the terminal device receives the second RRC reconfiguration message to time when the terminal device completes random access to the target base station, that is, from step S307 to step S308. A handover complete period is after step S309.

As shown in FIG. 3, mobility management of the terminal device in the connected mode is controlled by a network device. To be specific, the network device indicates, by sending a handover message, a cell to which the terminal device is to be handed over and how to perform the handover. In addition, after receiving the handover message, the terminal device accesses the target cell based on content included in the handover message. Therefore, successful sending of the handover message is a necessary condition of ensuring successful handover under a conventional handover mechanism.

However, if the terminal device meets an MPE limiting condition, a capability of the terminal device is limited, for example, transmit power is reduced, or even a transmit beam is disabled. Consequently, the terminal device sends a preamble and/or an MSG3, and the target base station easily fails to demodulate a random access message, resulting in a handover failure.

In view of this, embodiments of this application provide a communication method and apparatus, a storage medium, and a computer program product, to reduce impact of an MPE on mobility, and increase a handover success rate.

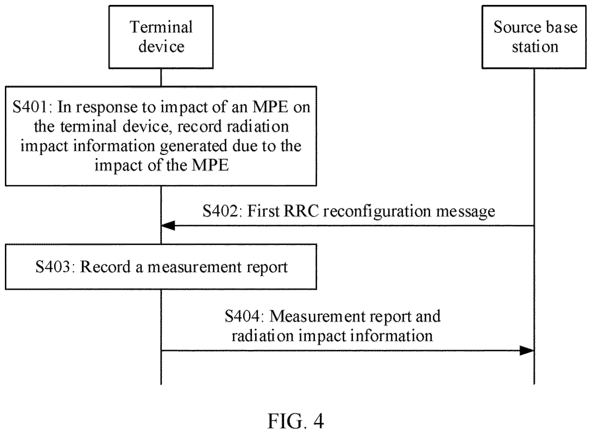

Refer to FIG. 4. FIG. 4 is a schematic flowchart of a first communication method according to an embodiment of this application. A terminal device in this embodiment may be the terminal device in the network architecture shown in FIG. 1. In this embodiment, a function performed by the terminal device may be performed by an apparatus in the terminal device, or may be performed by an apparatus that can be used in cooperation with the terminal device. A source base station and a target base station in this embodiment may be the foregoing network devices. In this embodiment, a function performed by a network device may be performed by an apparatus in the network device, or may be performed by an apparatus that can be used in cooperation with the network device. The method includes but is not limited to the following steps.

S401: In response to impact of an MPE on the terminal device, the terminal device records radiation impact information generated due to the impact of the MPE.

As described above, the impact of the MPE on the terminal device means that the terminal device meets a limiting condition of the MPE and performs an operation of limiting a capability of the terminal device, for example, reducing transmit powers (or referred to as uplink powers) of all beams, reducing an uplink power of a beam in a direction of a person, disabling a transmit beam, disabling a transmit beam in a direction of a person, or the like.

In embodiments of this application, the radiation impact information is information that is generated due to the impact of the MPE and that is recorded when the terminal device is affected by the MPE. The radiation impact information may include but is not limited to one or more of uplink beam information, a maximum uplink power, uplink power headroom, and the like. The uplink beam information may include whether each uplink beam is affected by the MPE, a transmit power of each uplink beam under the impact of the MPE, a reduced transmit power, or the like. The maximum uplink power indicates a maximum transmit power for data or signaling transmission under the impact of the MPE. The uplink power headroom indicates a remaining transmit power that can be used under the impact of the MPE.

The radiation impact information may be obtained through recording when it is determined that the terminal device is affected by the MPE. For example, if it is determined that time at which the terminal device is affected by the MPE is 18:00:00, the radiation impact information is recorded at 18:00:00. Alternatively, the radiation impact information may be obtained through recording when preset duration in which the terminal device is affected by the MPE expires, may be obtained through recording when an uplink power adjusted after the terminal device is affected by the MPE is less than a preset threshold, or the like. This is not limited herein.

The preset duration and the preset threshold are not limited either. For example, it is assumed that the preset duration is 2 seconds. If it is determined that the time at which the terminal device is affected by the MPE is 18:00:00, the radiation impact information is recorded at 18:00:02. It is assumed that the preset threshold is 20 W. If it is determined that the time at which the terminal device is affected by the MPE is 18:00:00, and the uplink power of the uplink beam is 18 W at 18:00:30, the radiation impact information is recorded at 18:00:30.

In a possible example, before step S401, the method may further include step S400 that is not shown in FIG. 4: Receive indication information from a network side or obtain indication information from a preset protocol.

The network side is a network device, and may include a source base station currently accessed by the terminal device, or may include another network device. This is not limited herein. If the network side is the source base station currently accessed by the terminal device, the indication information may be sent by the source base station to the terminal device in the first RRC reconfiguration message, may be separately sent to the terminal device, may be sent to the terminal device in another message, or the like. This is not limited herein. The preset protocol may be a protocol preset by a vendor like an operator or a hardware developer. It should be noted that if the indication information is sent by the source base station to the terminal device in the first RRC reconfiguration message, step S403 may be performed after step S400 is performed. Under the impact of the MPE, step S401 may be performed.

In embodiments of this application, the indication information may include first indication information. The first indication information indicates whether the terminal device reports a measurement report when the terminal device is affected by the MPE. For example, the first indication information indicates that the terminal device does not report a measurement report when the terminal device is affected by the MPE. In this way, after the first RRC reconfiguration message of the source base station is received, the measurement report is not sent to the source base station, and a handover procedure is not triggered. This can avoid a handover failure. In addition, reporting of the measurement report is allowed when the terminal device is not affected by the MPE. In this way, after the first RRC reconfiguration message of the source base station is received, the measurement report may be sent to the source base station, which is the same as the procedure shown in FIG. 3. Because the terminal device is not affected by the MPE, a handover procedure of the terminal device is not affected.

The indication information may alternatively include second indication information. The second indication information indicates whether the terminal device reports the measurement report and MPE information when the terminal device is affected by the MPE. For example, the second indication information indicates that when the terminal device is affected by the MPE, reporting of the measurement report and the radiation impact information generated due to the impact of the MPE that are of the terminal device is allowed. In this way, after receiving the first RRC reconfiguration message of the source base station, the terminal device may send the measurement report and the radiation impact information to the source base station. The source base station may determine, based on the radiation impact information, not to perform handover, to avoid a handover failure. Alternatively, a to-be-handed-over target cell may be determined based on the radiation impact information. For example, the to-be-handed-over target cell is a cell at which a beam of the terminal device is not affected by the MPE. Alternatively, the radiation impact information may be sent to the target base station, so that the target base station optimizes the second RRC configuration message based on the radiation impact information, to reduce impact of the MPE on mobility and increase a handover success rate.

A method for reporting the radiation impact information is not limited in this application. The radiation impact information may be separately reported to the source base station, or may be reported to the source base station together with the measurement report, or the radiation impact information may be added to the measurement report and then reported to the source base station. In view of this, the indication information indicates that when the terminal device is affected by the MPE, if the first RRC reconfiguration message is received from the source base station, reporting of the measurement report and the radiation impact information generated due to the impact of the MPE that are of the terminal device is allowed. Step S404 includes: sending the measurement report and the radiation impact information to the source base station based on the indication information (or the second indication information).

Optionally, the indication information specifically indicates to add the radiation impact information to the measurement report. Step S404 includes: sending, to the source base station based on the indication information (or the second indication information), a measurement report to which the radiation impact information is added. In this way, the radiation impact information may be first added to the measurement report, and then the measurement report to which the radiation impact information is added is sent to the source base station, so that both the measurement report that does not include the radiation impact information and the radiation impact information are sent to the source base station. This can avoid a handover failure event caused by a failure to optimize, based on the radiation impact information, a second RRC reconfiguration message sent to the terminal device because the radiation impact information is received after the measurement report.

For another example, the second indication information indicates that reporting of the measurement report is allowed when the terminal device is not affected by the MPE. In this way, after the first RRC reconfiguration message of the source base station is received, the measurement report may be sent to the source base station. Because the terminal device is not affected by the MPE, a handover procedure of the terminal device is not affected. In other words, when the terminal device is not affected by the MPE, a procedure of handover steps is the same as that in the conventional technology, and the first indication information and/or the second indication information may be understood as invalid.

A manner of sending the first indication information and the second indication information is not limited in this application. The first indication information and the second indication information may be sent to the terminal device in advance, or may be sent after the terminal device meets a limiting condition of the MPE, before the terminal device is affected by the MPE, and the like. For example, if the first indication information indicates that the measurement report is not reported when the terminal device is affected by the MPE, the first indication information may be sent and the second indication information may not be sent after the terminal device meets the limiting condition of the MPE and before the terminal device is affected by the MPE. For another example, if the first indication information indicates that the measurement report is reported when the terminal device is affected by the MPE, and the second indication information indicates that reporting of the measurement report to which the radiation impact information is added is allowed when the terminal device is affected by the MPE, the first indication information and the second indication information may be sent to the terminal device in advance.

S402: The source base station sends the first RRC reconfiguration message to the terminal device.

Correspondingly, the terminal device receives the first RRC reconfiguration message from the source base station. For step S402 and step S403, refer to the descriptions of step S302 in FIG. 3. Details are not described herein again. It should be noted that when the terminal device is not affected by the MPE, the measurement report of the terminal device may be recorded or reported. Alternatively, when the terminal device is affected by the MPE, the measurement report of the terminal device is not recorded or reported, or the measurement report is reported together with the radiation impact information to the source base station, or the measurement report and the radiation impact information are separately reported to the source base station.

S403: The terminal device records the measurement report.

S404: The terminal device sends the measurement report and the radiation impact information to the source base station.

In the method described in FIG. 4, when the terminal device is affected by the MPE, the radiation impact information generated due to the impact of the MPE is recorded. If the terminal device receives the first RRC reconfiguration message from the source base station, the terminal device first records the measurement report, and then sends the measurement report and the radiation impact information to the source base station. In this way, the source base station may perform handover processing based on the radiation impact information, so that impact of the MPE on mobility can be reduced, and a handover success rate can be increased.

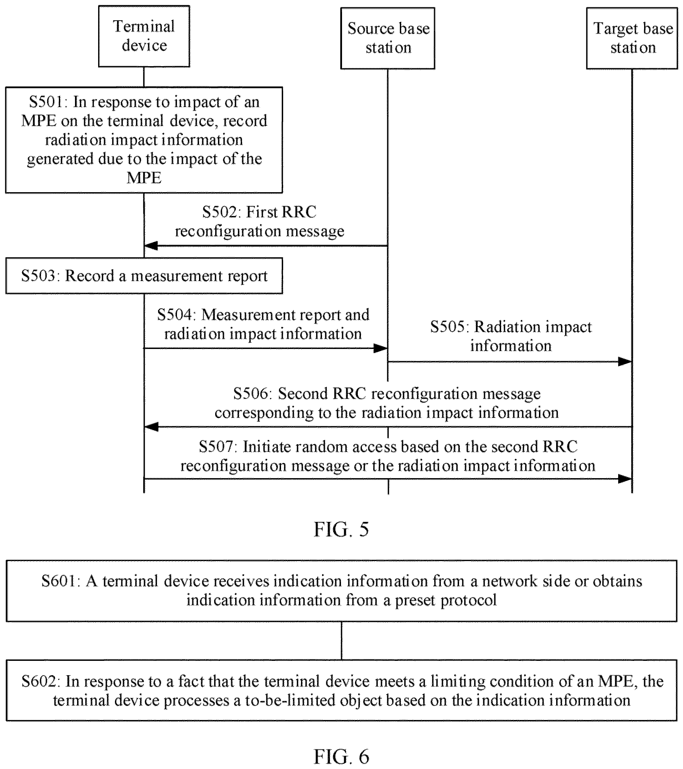

Refer to FIG. 5. FIG. 5 is a schematic flowchart of a second communication method according to an embodiment of this application. A terminal device in this embodiment may be the terminal device in the network architecture shown in FIG. 1. In this embodiment, a function performed by the terminal device may be performed by an apparatus in the terminal device, or may be performed by an apparatus that can be used in cooperation with the terminal device. A source base station and a target base station in this embodiment may be the foregoing network devices. In this embodiment, a function performed by a network device may be performed by an apparatus in the network device, or may be performed by an apparatus that can be used in cooperation with the network device. The method includes but is not limited to the following steps.

S501: In response to impact of an MPE on the terminal device, the terminal device records radiation impact information generated due to the impact of the MPE.

S502: The source base station sends a first RRC reconfiguration message to the terminal device.

S503: The terminal device records a measurement report.

S504: The terminal device sends the measurement report and the radiation impact information to the source base station.

For step S501 to step S504, refer to descriptions of step S401 to step S404. Details are not described herein again.

It may be understood that, after receiving the measurement report and the radiation impact information, the source base station may perform handover determining with reference to the descriptions in step S303, to determine whether the terminal device needs to perform handover. If the terminal device needs to perform handover, a handover request message may be sent to the target base station. If the terminal device does not need to perform handover, a handover procedure may not be triggered, to avoid a handover failure.

S505: The source base station sends the radiation impact information to the target base station.

In embodiments of this application, the target base station may be a base station whose signal strength determined by the terminal device in the measurement report is greater than signal strength of the source base station. Alternatively, in a possible example, before step S505, the following step may further be included: The source base station determines the target base station based on the radiation impact information.

A method for determining the target base station is not limited in this application. The target base station may be determined based on whether a cell covered by the target base station is a cell affected by the MPE. For example, a cell at which a beam of the terminal device is not affected by the MPE is selected as a target cell, and then the target base station is selected based on a base station corresponding to the target cell. In this way, impact of the MPE on mobility can be reduced, and a handover success rate can be increased.

It should be noted that the radiation impact information sent in step S505 may be separately sent, or may be carried in a handover request message or another message and sent to the target base station, or the like. This is not limited herein.

S506: The target base station sends, to the terminal device through the source base station, a second RRC reconfiguration message corresponding to the radiation impact information.

The second RRC reconfiguration message in step S506 may be understood as a message for optimizing an RRC reconfiguration message based on the radiation impact information. In other words, a message in the second RRC reconfiguration message may indicate to reduce the impact of the MPE. For example, the terminal device is indicated not to use a beam affected by the MPE when sending a random parameter. The random parameter may include a preamble, an MSG3, or the like.

Before step S506 is performed, the target base station may perform step S305 shown in FIG. 3 to perform admission control, to determine whether to allow access of the terminal device. The second RRC reconfiguration message in step S506 may be carried in a handover request acknowledgment message or another message of the target base station, or may be separately sent by the target base station to the source base station, or the like. This is not limited herein.

In a possible example, after step S506, the method further includes the following step: The target base station sends a handover request reject message to the source base station. In this way, the handover procedure may not be triggered, to avoid a handover failure.

S507: The terminal device initiates random access to the target base station based on the second RRC reconfiguration message or the radiation impact information.

For step S507, refer to the descriptions of step S308 in FIG. 3. It should be noted that, in step S507, an uplink beam used by a random parameter sent in a random access process may not be affected by the MPE. The random parameter may include a preamble, an MSG3, or the like. It may be understood that the random parameter is sent by using an uplink beam that is not affected by the MPE, so that the impact of the MPE on the mobility can be reduced, and the handover success rate can be increased.

In the method described in FIG. 5, when the terminal device is affected by the MPE, the radiation impact information generated due to the impact of the MPE is recorded. If the terminal device receives the first RRC reconfiguration message from the source base station, the terminal device first records the measurement report, and then sends the measurement report and the radiation impact information to the source base station. Then, the source base station sends the radiation impact information to the target base station, the target base station may send, to the source base station, the second RRC reconfiguration message corresponding to the radiation impact information, and the terminal device may initiate random access to the target base station based on the second RRC reconfiguration message or the radiation impact information. In this way, an uplink beam for sending a random parameter in the random access process may not be affected by the MPE. This reduces impact of the MPE in the random access process, and may further increase the handover success rate.

Refer to step S309. In a possible example, after step S507, the following step may further be included: The terminal device sends an RRC reconfiguration complete message to the target base station.

Refer to FIG. 6. FIG. 6 is a schematic flowchart of a third communication method according to an embodiment of this application. A terminal device in this embodiment may be the terminal device in the network architecture shown in FIG. 1. In this embodiment, a function performed by the terminal device may be performed by an apparatus in the terminal device, or may be performed by an apparatus that can be used in cooperation with the terminal device. A source base station and a target base station in this embodiment may be the foregoing network devices. In this embodiment, a function performed by a network device may be performed by an apparatus in the network device, or may be performed by an apparatus that can be used in cooperation with the network device. The method includes but is not limited to the following steps.

S601: The terminal device receives indication information from a network side or obtains indication information from a preset protocol.

The indication information in step S601 is different from the indication information in step S400. In embodiments of this application, the indication information indicates an unlimited object and/or a to-be-limited object of an MPE. The unlimited object may be an object that is not affected by the MPE, and the to-be-limited object may be an object that is affected by the MPE. In other words, when the terminal device is affected by the MPE, the unlimited object does not need to be adjusted based on a requirement of the MPE, but the to-be-limited object needs to be adjusted based on the requirement of the MPE. The to-be-limited object may be an object other than the unlimited object.

It should be noted that the unlimited object may alternatively be an object that reduces impact of the MPE. In other words, when an object is identified as an unlimited object, a limitation of the MPE on an uplink power may be reduced, and the impact of the MPE may also be reduced. In embodiments of this application, it may be determined, based on a scenario of the terminal device, whether the unlimited object is an object that is not affected by the MPE or an object that reduces the impact of the MPE. For example, in an unlimited scenario, it is determined that the unlimited object is an object that is not affected by the MPE, and in another scenario, it is determined that the unlimited object is an object that reduces the impact of the MPE. Alternatively, determining may be performed based on a quantity of persons in an NHZ. For example, when the quantity of persons is large, it is determined that the unlimited obj ect is an obj ect that is not affected by the MPE; or when the quantity of persons is small, it is determined that the unlimited object is an object that reduces the impact of the MPE.

The unlimited object includes but is not limited to at least one of the following: an unlimited channel, an unlimited signaling bearer, an unlimited scenario, an unlimited channel corresponding to an unlimited purpose, an unlimited time period after the unlimited scenario is identified, an unlimited procedure in the unlimited scenario, and the like.

The unlimited channel indicates a channel that is not affected by the MPE, and may include a physical uplink control channel (physical uplink control channel, PUCCH), or may include a physical random access channel (physical random access channel, PRACH). Most signaling sent via the unlimited channel is control signaling, and most radiation is from signaling of a data packet. Therefore, it may be preset that the unlimited channel is not affected by the MPE, to reduce impact of the MPE on mobility and increase a handover success rate.

The unlimited signaling bearer indicates a signaling bearer that is not affected by the MPE, and may include an SRB1, an SRB2, an SRB3, and the like in a signaling radio bearer (signaling radio bearer, SRB). The SRB 1, the SRB2, and the SRB3 are mainly used to transmit control signaling, to reduce the impact of the MPE on the mobility. The to-be-limited signaling bearer indicates a signaling bearer that is affected by the MPE, and may include an SRB4 to an SRB9. In other words, signaling transmitted through the SRB4 to the SRB9 is affected by the MPE, and signaling transmitted through the SRB1, the SRB2, and the SRB3 is not affected by the MPE.

The unlimited purpose indicates that a purpose of sending uplink data is not affected by the MPE. The unlimited channel corresponding to the unlimited purpose may include a PRACH used for random access of handover. It may be understood that, signaling transmitted through the PRACH used for random access of handover is related to a handover procedure, and it may be preset that an unlimited channel corresponding to the purpose is not affected by the MPE, to reduce the impact of the MPE on the mobility and increase the handover success rate. In addition, it can be avoided that signaling of all unlimited channels is unlimited, and radiation impact on a person can be reduced. The signaling used for the PRACH transmission based on the system information (system information, SI) is independent of the handover procedure and may be affected by the MPE, to reduce radiation impact on a person.

Signaling transmitted via a PUCCH, such as a channel quality information (channel quality information, CQI) report, an acknowledgment (Acknowledgment, ACK) message, a scheduling request (Scheduling Request, SR), and a channel state information (channel state information, CSI) report, may be determined whether to be limited by the MPE based on a purpose of transmitting the signaling. It may be understood that, if a purpose of transmitting signaling via the PUCCH is related to mobility of the terminal device, it may be determined that the purpose is an unlimited purpose.

The unlimited scenario indicates a scenario that is not affected by the MPE, and may include a handover scenario, an RRC establishment scenario, an RRC reestablishment (RRC Reestablishment) scenario, and the like. It may be understood that all the foregoing scenarios are related to the mobility of the terminal device. The scenario is preset to be not affected by the MPE, so that the impact of the MPE on the mobility can be reduced, and a handover success rate can be increased.

A method for identifying the unlimited scenario is not limited in this application. After the source base station sends a handover request of the terminal device, the terminal device may be identified to be in a handover scenario. Alternatively, when the terminal device receives an RRC reconfiguration message (a second RRC reconfiguration message) used for triggering handover, the terminal device may be identified to be in a handover scenario. Alternatively, when the terminal device enters an active (active) state from an idle (idle) state without limitation, if the terminal device sends an RRC establishment request message to a serving cell, to establish a control signaling transmission channel, the terminal device is identified to be in an RRC reestablishment scenario or the like.

The unlimited time period after the unlimited scenario is identified and the unlimited procedure in the unlimited scenario are not limited in this application. The unlimited time period may be one minute, 30 seconds, or the like after the unlimited scenario is identified. The unlimited procedure may be a procedure related to data configuration, or the like.

In a possible example, before step S601, the method further includes: The source base station identifies that the terminal device is in the unlimited scenario. In other words, after identifying that the terminal device is in the unlimited scenario, the source base station sends the indication information to the terminal device, so that indication effectiveness can be improved.

For example, when the source base station sends the handover request to the terminal device, if the source base station identifies that a subsequent scenario is a handover scenario, the source base station sends the indication information to the terminal device, to indicate that the terminal device is not affected by the MPE when the unlimited scenario is identified, or that the terminal device is not affected by the MPE in the unlimited time period after the unlimited scenario is identified, or that the terminal device is not affected by the MPE when the unlimited procedure in the unlimited scenario is identified.

It should be noted that, after identifying that the terminal device is in the unlimited scenario, the terminal device may determine independently that a subsequent time period or some subsequent procedures are not affected by the MPE.

For example, when the terminal device receives the RRC reconfiguration message used for triggering handover, the terminal device identifies that the scenario is a handover scenario, and may not be limited by the MPE 30 seconds after the handover scenario is identified, and a limitation of the MPE is restored when an end of the handover scenario is identified. Alternatively, a random access procedure in the handover scenario is not limited by the MPE, and after the random access procedure ends or an RRC reconfiguration complete message is received, the limitation of the MPE is restored.

S602: The terminal device processes the to-be-limited object based on the indication information in response to a fact that the terminal device meets a limiting condition of the MPE.

The limiting condition of the MPE is described above. Details are not described herein again. A method for processing the to-be-limited object may include reducing powers of all uplink beams, reducing a power of an uplink beam corresponding to a direction of a person in the NHZ, using an unaffected uplink beam, or the like.

In the method described in FIG. 6, after obtaining the indication information indicating the unlimited object and/or the to-be-limited object of the MPE, the terminal device processes the to-be-limited object based on the indication information in response to the fact that the terminal device meets the limiting condition of the MPE, so that the impact of the MPE on the mobility can be reduced, and the handover success rate can be increased.

The methods in embodiments of this application are described in detail above. Apparatuses in embodiments of this application are provided below.

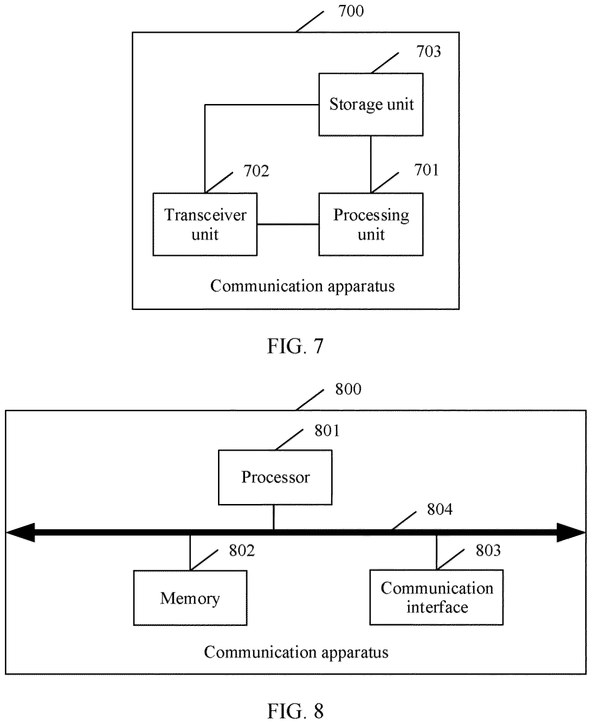

Refer to FIG. 7. FIG. 7 is a diagram of a structure of a communication apparatus according to an embodiment of this application. The communication apparatus 700 may include a processing unit 701, a transceiver unit 702, and a storage unit 703. The communication apparatus 700 may include a terminal device, a source base station, and a target base station. The following separately provides descriptions based on units of each communication apparatus 700.

When the communication apparatus 700 is a terminal device, the processing unit 701 is configured to: in response to impact of a maximum permissible exposure MPE, record radiation impact information generated due to the impact of the MPE.

The transceiver unit 702 is configured to receive a first RRC reconfiguration message from the source base station.

The processing unit 701 is further configured to record a measurement report, and
send the measurement report and the radiation impact information to the source base station.

In a possible example, the storage unit 703 is configured to store a preset protocol. The transceiver unit 702 is further configured to receive indication information from a network side, or the processing unit 701 is further configured to obtain indication information from the preset protocol, where the indication information indicates that under the impact of the MPE, if the first RRC reconfiguration message is received from the source base station, reporting of the measurement report and the radiation impact information generated due to the impact of the MPE is allowed. The transceiver unit 702 is specifically configured to send the measurement report and the radiation impact information to the source base station based on the indication information.

In a possible example, the indication information specifically indicates to add the radiation impact information to the measurement report. The transceiver unit 702 is specifically configured to send, to the source base station based on the indication information, a measurement report to which the radiation impact information is added.

In a possible example, the indication information alternatively indicates not to report the measurement report under the impact of the MPE.

In a possible example, the indication information alternatively indicates that reporting of the measurement report is allowed under no impact of the MPE.

In a possible example, the transceiver unit 702 is further configured to receive, from the source base station, a second RRC reconfiguration message that corresponds to the radiation impact information and that is from the target base station.

In a possible example, the transceiver unit 702 is further configured to initiate random access to the target base station based on the second RRC reconfiguration message or the radiation impact information.

In addition, when the communication apparatus 700 is the terminal device, the storage unit 703 is configured to store the preset protocol. The transceiver unit 702 is further configured to receive the indication information from the network side, or the processing unit 701 is further configured to obtain the indication information from the preset protocol, where the indication information indicates an unlimited object and/or a to-be-limited object of the MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario. The processing unit 701 is further configured to: in response to a fact that a limiting condition of the MPE is met, process the to-be-limited object based on the indication information, so that the terminal device is affected by the MPE.

When the communication apparatus 700 is a source base station, the transceiver unit 702 is configured to send a first RRC reconfiguration message to a terminal device, and receive, from the terminal device, a measurement report and radiation impact information that are of the terminal device, where the radiation impact information is information that is generated due to impact of an MPE and that is recorded when the terminal device is affected by the MPE.

In a possible example, the transceiver unit 702 is specifically configured to receive, from the terminal device, a measurement report to which the radiation impact information is added.

In a possible example, the transceiver unit 702 is further configured to send the radiation impact information to a target base station.

In a possible example, the processing unit 701 is further configured to determine the target base station based on the radiation impact information.

In a possible example, the transceiver unit 702 is further configured to receive a handover request reject message from the target base station.

In a possible example, the transceiver unit 702 is further configured to: receive, from the target base station, a second RRC reconfiguration message corresponding to the radiation impact information; and send the second RRC reconfiguration message to the terminal device.

In addition, when the communication apparatus 700 is the source base station, the transceiver unit 702 is configured to send the indication information to the terminal device, where the indication information indicates an unlimited object and/or a to-be-limited object of an MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario.

In a possible example, the processing unit 701 is further configured to identify that the terminal device is in the unlimited scenario.

When the communication apparatus 700 is a target base station, the transceiver unit 702 is configured to receive a measurement report and radiation impact information from a source base station, where the radiation impact information is information that is generated due to impact of an MPE and that is recorded when a terminal device is affected by the MPE.

In a possible example, the transceiver unit 702 is further configured to send a handover request reject message to the source base station.

In a possible example, the transceiver unit 702 is further configured to send a second RRC reconfiguration message corresponding to the radiation impact information to the source base station.

In a possible example, the transceiver unit 702 is further configured to receive random access initiated by the terminal device based on the second RRC reconfiguration message or the radiation impact information.

In the foregoing examples, optionally, the radiation impact information includes at least one of the following: uplink beam information, a maximum uplink power, and uplink power headroom.

In the foregoing examples, optionally, the radiation impact information is information that is generated due to the impact of the MPE and that is recorded when the terminal device is affected by the MPE, or when preset duration in which the terminal device is affected by the MPE expires, or when an uplink power adjusted after the terminal device is affected by the MPE is less than or equal to a preset threshold.

In the foregoing examples, optionally, the unlimited channel includes a PUCCH and/or a PRACH, and the unlimited channel corresponding to the unlimited purpose includes a PRACH used for random access of handover.

In the foregoing examples, optionally, the unlimited signaling bearer includes at least one of the following: an SRB1, an SRB2, and an SRB3.

In the foregoing examples, optionally, the unlimited scenario includes at least one of the following: a handover scenario, an RRC establishment scenario, and an RRC reestablishment scenario.

It should be noted that, for implementations of units, refer to corresponding descriptions in the method embodiment shown in FIG. 4, FIG. 5, or FIG. 6.

Refer to FIG. 8. FIG. 8 is a diagram of a structure of another communication apparatus according to an embodiment of this application. The communication apparatus 800 includes a processor 801, a memory 802, and a communication interface 803. The processor 801, the memory 802, and the communication interface 803 are connected to each other through a bus 804.

The memory 802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related computer program and data. The communication interface 803 is configured to receive and send data.

The processor 801 may be one or more central processing units (central processing units, CPUs). When the processor 801 is one CPU, the CPU may be a single-core CPU or a multicore CPU. The communication apparatus 800 may include a terminal device, a source base station, and a target base station. The following separately provides descriptions based on each communication apparatus 800. The processor 801 in the communication apparatus 800 is configured to read computer program code stored in the memory 802.

When the communication apparatus 800 is a terminal device, the processor 801 is configured to perform the following operations:
in response to impact of a maximum permissible exposure MPE, recording radiation impact information generated due to the impact of the MPE;
receiving a first RRC reconfiguration message from a source base station;
recording a measurement report; and
sending the measurement report and the radiation impact information to the source base station.

In a possible example, before recording the radiation impact information, the processor 801 is further configured to perform the following operation:
receiving indication information from a network side, or obtaining indication information from a preset protocol, where the indication information indicates that under the impact of the MPE, if the first RRC reconfiguration message is received from the source base station, reporting of the measurement report and the radiation impact information generated due to the impact of the MPE is allowed.

In an aspect of sending the measurement report and the radiation impact information to the source base station, the processor 801 is specifically configured to perform the following operation:
sending the measurement report and the radiation impact information to the source base station based on the indication information.

In a possible example, the indication information specifically indicates to add the radiation impact information to the measurement report. In an aspect of sending the measurement report and the radiation impact information to the source base station, the processor 801 is specifically configured to perform the following operation:
sending, to the source base station based on the indication information, a measurement report to which the radiation impact information is added.

In a possible example, the indication information alternatively indicates not to report the measurement report under the impact of the MPE.

In a possible example, the indication information alternatively indicates that reporting of the measurement report is allowed under no impact of the MPE.

In a possible example, after sending the measurement report and the radiation impact information to the source base station, the processor 801 is further configured to perform the following operation:
receiving, from the source base station, a second RRC reconfiguration message corresponding to the radiation impact information from the target base station.

In a possible example, the processor 801 is further configured to perform the following operation:
initiating random access to the target base station based on the second RRC reconfiguration message or the radiation impact information.

In addition, when the communication apparatus 800 is the terminal device, the processor 801 is configured to perform the following operations:
receiving the indication information from the network side, or obtaining the indication information from the preset protocol, where the indication information indicates an unlimited object and/or a to-be-limited object of the MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario; and
in response to a fact that the terminal device meets a limiting condition of the MPE, processing the to-be-limited object based on the indication information, so that the terminal device is affected by the MPE.

When the communication apparatus 800 is a source base station, the processor 801 is configured to perform the following operations:
sending a first RRC reconfiguration message to a terminal device; and
receiving, from the terminal device, a measurement report and radiation impact information that are of the terminal device, where the radiation impact information is information that is generated due to impact of an MPE and that is recorded when the terminal device is affected by the MPE.

In a possible example, in an aspect of receiving, from the terminal device, the measurement report and the radiation impact information that are of the terminal device, the processor 801 is specifically configured to perform the following operation:
receiving, from the terminal device, a measurement report to which the radiation impact information is added.

In a possible example, after receiving, from the terminal device, the measurement report and the radiation impact information that are of the terminal device, the processor 801 is further configured to perform the following operation:
sending the radiation impact information to a target base station.

In a possible example, before sending the radiation impact information to the target base station, the processor 801 is further configured to perform the following operation:
determining the target base station based on the radiation impact information.

In a possible example, after sending the radiation impact information to the target base station, the processor 801 is further configured to perform the following operation:
receiving a handover request reject message from the target base station.

In a possible example, after sending the radiation impact information to the target base station, the processor 801 is further configured to perform the following operations:
receiving, from the target base station, a second RRC reconfiguration message corresponding to the radiation impact information; and
sending the second RRC reconfiguration message to the terminal device.

In addition, when the communication apparatus 800 is the source base station, the processor 801 is configured to perform the following operation:
sending indication information to the terminal device, where the indication information indicates an unlimited object and/or a to-be-limited object of the MPE, and the unlimited object includes at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario.

In a possible example, before sending the indication information to the terminal device, the processor 801 is further configured to perform the following operation:
identifying that the terminal device is in the unlimited scenario.

When the communication apparatus 800 is a target base station, the processor 801 is configured to perform the following operation:
receiving a measurement report and radiation impact information from a source base station, where the radiation impact information is information that is generated due to impact of an MPE and that is recorded when a terminal device is affected by the MPE.

In a possible example, after receiving the measurement report and the radiation impact information from the source base station, the processor 801 is further configured to perform the following operation:
sending a handover request reject message to the source base station.

In a possible example, after receiving the measurement report and the radiation impact information from the source base station, the processor 801 is further configured to perform the following operation:
sending, to the source base station, a second RRC reconfiguration message corresponding to the radiation impact information.

In a possible example, the processor 801 is further configured to perform the following operation:
receiving random access initiated by the terminal device based on the second RRC reconfiguration message or the radiation impact information.

In the foregoing examples, optionally, the radiation impact information includes at least one of the following: uplink beam information, a maximum uplink power, and uplink power headroom.

In the foregoing examples, optionally, the radiation impact information is information that is generated due to the impact of the MPE and that is recorded when the terminal device is affected by the MPE, or when preset duration in which the terminal device is affected by the MPE expires, or when an uplink power adjusted after the terminal device is affected by the MPE is less than or equal to a preset threshold.

In the foregoing examples, optionally, the unlimited channel includes a PUCCH and/or a PRACH, and the unlimited channel corresponding to the unlimited purpose includes a PRACH used for random access of handover.

In the foregoing examples, optionally, the unlimited signaling bearer includes at least one of the following: an SRB1, an SRB2, and an SRB3.

In the foregoing examples, optionally, the unlimited scenario includes at least one of the following: a handover scenario, an RRC establishment scenario, and an RRC reestablishment scenario.

It should be noted that, for implementations of operations, refer to corresponding descriptions in the method embodiment shown in FIG. 4, FIG. 5, or FIG. 6.

An embodiment of this application further provides a first chip, including a processor and a memory. The processor is configured to invoke, from the memory, instructions stored in the memory, and run the instructions, so that a device installed with the chip performs the method shown in FIG. 4, FIG. 5, or FIG. 6.

An embodiment of this application further provides a second chip, including an input interface, an output interface, and a processing circuit. The input interface, the output interface, and the processing circuit are connected through an internal connection path, and the processing circuit is configured to perform the method shown in FIG. 4, FIG. 5, or FIG. 6.

An embodiment of this application further provides a third chip, including an input interface, an output interface, and a processor, and optionally, further including a memory. The input interface, the output interface, the processor, and the memory are connected through an internal connection path. The processor is configured to execute code in the memory. When the code is executed, the processor is configured to perform the method shown in FIG. 4, FIG. 5, or FIG. 6.

An embodiment of this application further provides a chip system. The chip system includes at least one processor, a memory, and an interface circuit. The memory, a transceiver, and the at least one processor are interconnected by using a line. The at least one memory stores instructions. When the instructions are executed by the processor, the method procedure shown in FIG. 4, FIG. 5, or FIG. 6 is implemented.

An embodiment of this application further provides a computer-readable storage medium. The computer-readable storage medium stores instructions. When the instructions are run on a computer, the method procedure shown in FIG. 4, FIG. 5, or FIG. 6 is implemented.

An embodiment of this application further provides a computer program product. The computer program product is configured to store a computer program. When the computer program runs on a computer, the method procedure shown in FIG. 4, FIG. 5, or FIG. 6 is implemented.

An embodiment of this application further provides a chip system. The chip system includes at least one processor, a memory, and an interface circuit. The memory, a transceiver, and the at least one processor are interconnected by using a line. The at least one memory stores instructions. When the instructions are executed by the processor, the method procedure shown in FIG. 4, FIG. 5, or FIG. 6 is implemented.

An embodiment of this application further provides a communication system. The communication system includes a terminal device, a source base station, and a target base station. When the terminal device, the source base station, and the target base station are run in the communication system, the terminal device, the source base station, and the target base station are configured to perform the method shown in FIG. 4, FIG. 5, or FIG. 6.

In conclusion, according to embodiments of this application, when the terminal device is affected by an MPE, radiation impact information generated due to the impact of the MPE is recorded. If the terminal device receives a first RRC reconfiguration message from the source base station, the terminal device first records a measurement report, and then sends the measurement report and the radiation impact information to the source base station. In this way, the source base station may perform handover processing based on the radiation impact information, so that impact of the MPE on mobility can be reduced, and a handover success rate can be increased. After receiving the radiation impact information, the target base station may optimize a second RRC reconfiguration message. The terminal device may optimize a random access process based on the second RRC reconfiguration message or the radiation impact information, to reduce the impact of the MPE on the mobility. This may further increase the handover success rate. In addition, when the terminal device meets a limiting condition of the MPE, the terminal device may be processed based on indication information indicating an unlimited object and/or a to-be-limited object of the MPE. This can also reduce the impact of the MPE on the mobility, and increase the handover success rate.

A person of ordinary skill in the art may understand that all or some of the procedures of the methods in the foregoing embodiments may be implemented by a computer program instructing related hardware. The computer program may be stored in a computer-readable storage medium. When the computer program runs, the procedures in the foregoing method embodiments may be included. The foregoing storage medium includes any medium that can store computer program code, such as a ROM, a random access memory RAM, a magnetic disk, or an optical disk.

## Claims

1. A communication method, comprising:
in response to impact of a maximum permissible exposure MPE on a terminal device, recording radiation impact information generated due to the impact of the MPE;
receiving a first radio resource control RRC reconfiguration message from a source base station;
recording a measurement report of the terminal device; and
sending the measurement report and the radiation impact information to the source base station.

2. The method according to claim 1, wherein the radiation impact information comprises at least one of the following: uplink beam information, a maximum uplink power, and uplink power headroom.

3. The method according to claim 1 or 2, wherein the radiation impact information is information that is generated due to the impact of the MPE and that is recorded when the terminal device is affected by the MPE, or when preset duration in which the terminal device is affected by the MPE expires, or when an uplink power adjusted after the terminal device is affected by the MPE is less than or equal to a preset threshold.

4. The method according to any one of claims 1 to 3, further comprising:
receiving indication information from a network side or obtaining indication information from a preset protocol, wherein the indication information indicates that when the terminal device is affected by the MPE, if the first RRC reconfiguration message is received from the source base station, reporting of the measurement report and the radiation impact information generated due to the impact of the MPE that are of the terminal device is allowed; and
the sending the measurement report and the radiation impact information to the source base station comprises:
sending the measurement report and the radiation impact information to the source base station based on the indication information.

5. The method according to claim 4, wherein the indication information indicates to add the radiation impact information to the measurement report; and
the sending the measurement report and the radiation impact information to the source base station comprises:
sending, to the source base station based on the indication information, a measurement report to which the radiation impact information is added.

6. The method according to claim 4, wherein the indication information alternatively indicates not to report the measurement report when the terminal device is affected by the MPE.

7. The method according to claim 4, wherein the indication information alternatively indicates that reporting of the measurement report is allowed when the terminal device is not affected by the MPE.

8. The method according to any one of claims 1 to 7, further comprising:
receiving, from the source base station, a second RRC reconfiguration message corresponding to the radiation impact information from the target base station.

9. The method according to claim 8, further comprising:
initiating random access to the target base station based on the second RRC reconfiguration message or the radiation impact information.

10. The method according to any one of claims 1 to 3, further comprising:
receiving indication information from a network side or obtaining indication information from a preset protocol, wherein the indication information indicates an unlimited object and/or a to-be-limited object of the MPE, and the unlimited object comprises at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario; and
in response to a fact that the terminal device meets a limiting condition of the MPE, processing the to-be-limited object based on the indication information, so that the terminal device is affected by the MPE.

11. The method according to claim 10, wherein the unlimited channel comprises a physical uplink control channel PUCCH and/or a physical random access channel PRACH, and the unlimited channel corresponding to the unlimited purpose comprises a PRACH used for random access of handover.

12. The method according to claim 10, wherein the unlimited signaling bearer comprises at least one of the following: a signaling radio bearer SRB1, an SRB2, and an SRB3.

13. The method according to claim 10, wherein the unlimited scenario comprises at least one of the following: a handover scenario, an RRC establishment scenario, and an RRC reestablishment scenario.

14. A communication method, comprising:
sending a first RRC reconfiguration message to a terminal device; and
receiving a measurement report and radiation impact information that are of the terminal device, wherein the radiation impact information is information that is generated due to impact of an MPE and that is recorded when the terminal device is affected by the MPE.

15. The method according to claim 14, wherein the radiation impact information comprises at least one of the following: uplink beam information, a maximum uplink power, and uplink power headroom.

16. The method according to claim 14 or 15, wherein the receiving a measurement report and radiation impact information that are of the terminal device comprises:
receiving, from the terminal device, a measurement report to which the radiation impact information is added.

17. The method according to any one of claims 14 to 16, further comprising:
sending the radiation impact information to a target base station.

18. The method according to claim 17, further comprising:
determining the target base station based on the radiation impact information.

19. The method according to claim 17, further comprising:
receiving a handover request reject message from the target base station.

20. The method according to claim 17, further comprising:
receiving, from the target base station, a second RRC reconfiguration message corresponding to the radiation impact information; and
sending the second RRC reconfiguration message to the terminal device.

21. The method according to any one of claims 14 to 20, wherein the method further comprises:
sending indication information to the terminal device, wherein the indication information indicates an unlimited object and/or a to-be-limited object of the MPE, and the unlimited object comprises at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario.

22. The method according to claim 21, further comprising:
identifying that the terminal device is in the unlimited scenario.

23. A communication method, comprising:
receiving a measurement report and radiation impact information from a source base station, wherein the radiation impact information is information that is generated due to impact of an MPE and that is recorded when a terminal device is affected by the MPE.

24. The method according to claim 23, further comprising:
sending a handover request reject message to the source base station.

25. The method according to claim 23 or 24, further comprising:
sending, to the source base station, a second RRC reconfiguration message corresponding to the radiation impact information.

26. The method according to claim 25, further comprising:
receiving random access initiated by the terminal device based on the second RRC reconfiguration message or the radiation impact information.

27. A communication apparatus, comprising:
a processing unit, configured to: in response to impact of an MPE on a terminal device, record radiation impact information generated due to the impact of the MPE; and
a transceiver unit, configured to receive a first RRC reconfiguration message from a source base station, wherein
the processing unit is further configured to record a measurement report; and
the transceiver unit is further configured to send the measurement report and the radiation impact information to the source base station.

28. The apparatus according to claim 27, wherein the radiation impact information comprises at least one of the following: uplink beam information, a maximum uplink power, and uplink power headroom.

29. The apparatus according to claim 27 or 28, wherein the radiation impact information is information that is generated due to the impact of the MPE and that is recorded when the terminal device is affected by the MPE, or when preset duration of the impact of the MPE expires, or when an uplink power adjusted after the impact of the MPE is less than or equal to a preset threshold.

30. The apparatus according to any one of claims 27 to 29, wherein the communication apparatus further comprises a storage unit, configured to store a preset protocol;
the transceiver unit is further configured to receive indication information from a network side, or the processing unit is further configured to obtain indication information from the preset protocol, wherein the indication information indicates that under the impact of the MPE, if the first RRC reconfiguration message is received from the source base station, reporting of the measurement report and the radiation impact information generated due to the impact of the MPE is allowed; and
the transceiver unit is specifically configured to send the measurement report and the radiation impact information to the source base station based on the indication information.

31. The apparatus according to claim 30, wherein the indication information indicates to add the radiation impact information to the measurement report; and
the transceiver unit is specifically configured to send, to the source base station based on the indication information, a measurement report to which the radiation impact information is added.

32. The apparatus according to claim 30, wherein the indication information alternatively indicates not to report the measurement report under the impact of the MPE.

33. The apparatus according to claim 30, wherein the indication information alternatively indicates that reporting of the measurement report is allowed under no impact of the MPE.

34. The apparatus according to any one of claims 27 to 33, wherein the transceiver unit is further configured to receive, from the source base station, a second RRC reconfiguration message that corresponds to the radiation impact information and that is from the target base station.

35. The apparatus according to claim 34, wherein the transceiver unit is further configured to initiate random access to the target base station based on the second RRC reconfiguration message or the radiation impact information.

36. The apparatus according to any one of claims 27 to 29, wherein the communication apparatus further comprises a storage unit, configured to store a preset protocol;
the transceiver unit is further configured to receive indication information from a network side, or the processing unit is further configured to obtain indication information from the preset protocol, wherein the indication information indicates an unlimited object and/or a to-be-limited object of the MPE, and the unlimited object comprises at least one of the following: an unlimited channel, an unlimited signaling bearer, an unlimited scenario, an unlimited channel corresponding to an unlimited purpose, an unlimited time period after the unlimited scenario is identified, and an unlimited procedure in the unlimited scenario; and
the processing unit is further configured to: in response to a fact that a limiting condition of the MPE is met, process the to-be-limited object based on the indication information, so that the terminal device is affected by the MPE.

37. The apparatus according to claim 36, wherein the unlimited channel comprises a PUCCH and/or a PRACH, and the unlimited channel corresponding to the unlimited purpose comprises a PRACH used for random access of handover.

38. The apparatus according to claim 36, wherein the unlimited signaling bearer comprises at least one of the following: an SRB1, an SRB2, and an SRB3.

39. The apparatus according to claim 36, wherein the unlimited scenario comprises at least one of the following: a handover scenario, an RRC establishment scenario, and an RRC reestablishment scenario.

40. A communication apparatus, comprising:
a transceiver unit, configured to send a first RRC reconfiguration message to a terminal device, wherein
the transceiver unit is further configured to receive a measurement report and radiation impact information that are of the terminal device, wherein the radiation impact information is information that is generated due to impact of an MPE and that is recorded when the terminal device is affected by the MPE.

41. The apparatus according to claim 40, wherein the radiation impact information comprises at least one of the following: uplink beam information, a maximum uplink power, and uplink power headroom.

42. The apparatus according to claim 40 or 41, wherein the transceiver unit is specifically configured to receive a measurement report to which the radiation impact information is added.

43. The apparatus according to any one of claims 40 to 42, wherein the transceiver unit is further configured to send the radiation impact information to a target base station.

44. The apparatus according to claim 43, wherein the communication apparatus further comprises:
a processing unit, configured to determine the target base station based on the radiation impact information.

45. The apparatus according to claim 43, wherein the transceiver unit is further configured to receive a handover request reject message from the target base station.

46. The apparatus according to claim 43, wherein the transceiver unit is further configured to: receive, from the target base station, a second RRC reconfiguration message corresponding to the radiation impact information; and send the second RRC reconfiguration message to the terminal device.

47. The apparatus according to any one of claims 40 to 46, wherein the transceiver unit is further configured to send indication information to the terminal device, wherein the indication information indicates an unlimited object and/or a to-be-limited object of the MPE, and the unlimited object comprises at least one of the following: an unlimited channel, an unlimited signaling bearer, an unlimited scenario, an unlimited channel corresponding to an unlimited purpose, an unlimited time period after the unlimited scenario is identified, and/or an unlimited procedure in the unlimited scenario.

48. The apparatus according to claim 47, wherein the communication apparatus further comprises:
a processing unit, configured to identify that the terminal device is in the unlimited scenario.

49. A communication apparatus, comprising:
a transceiver unit, configured to receive a measurement report and radiation impact information from a source base station, wherein the radiation impact information is information that is generated due to impact of an MPE and that is recorded when a terminal device is affected by the MPE.

50. The apparatus according to claim 49, wherein the transceiver unit is further configured to send a handover request reject message to the source base station.

51. The apparatus according to claim 49 or 50, wherein the transceiver unit is further configured to send, to the source base station, a second RRC reconfiguration message corresponding to the radiation impact information.

52. The apparatus according to claim 51, wherein the transceiver unit is further configured to receive random access initiated by the terminal device based on the second RRC reconfiguration message or the radiation impact information.

53. A communication apparatus, comprising at least one processor and a communication interface, wherein the at least one processor is configured to invoke a computer program stored in at least one memory, so that the communication apparatus implements the method according to any one of claims 1 to 26.

54. A communication system, wherein the communication system comprises a terminal device, a source base station, and a target base station, the terminal device is configured to perform the method according to any one of claims 1 to 13, the source base station is configured to perform the method according to any one of claims 14 to 22, and the target base station is configured to perform the method according to any one of claims 23 to 26.

55. A computer-readable storage medium, wherein the computer-readable storage medium stores a computer program, and when the computer program runs on one or more processors, the method according to any one of claims 1 to 26 is implemented.

56. A computer program product, wherein when the computer program product runs on one or more processors, the method according to any one of claims 1 to 26 is implemented.
